# EUROPEAN PATENT SPECIFICATION

(11) **EP 0 528 473 B1**
(45) Date of publication and mention of the grant of the patent: **24.04.1996**
(21) Application number: 92202346.0
(22) Date of filing: 28.07.1992
(51) Int. Cl.: H01M 2/16, H01M 2/18, H01M 10/34

(54) **Separator for mat-immobilized-electrolyte battery**
Separator für eine Batterie mit einem Matte-immobilisierten Elektrolyt
Séparateur pour une batterie avec un électrolyte immobilisé par un mat

(30) Priority: 21.08.1991 US 748020
(43) Date of publication of application: 24.02.1993
(73) Proprietor: GENERAL MOTORS CORPORATION, Detroit Michigan 48202 (US)
(72) Inventor: Willmann, Norman Leroy, Anderson, IN 46017 (US); Limbert, Jack L., Daleville, IN 47334 (US); Eisenhut, Neil Ronald, Pendleton, IN 46064 (US)
(74) Representative: Denton, Michael John

(56) References cited:
- EP-A- 0 334 091
- JOURNAL OF POWER SOURCES. vol. 23, 1988, LAUSANNE CH pages 109 - 111 J. W. REITZ 'Update of Separator Technology for Lead-Acid Batteries'

## Description

This invention relates to mat-immobilized-electrolyte, Pb-acid electric storage batteries (e.g., gas-recombination batteries) and more particularly to electrolyte-immobilizing mat separators therefor which facilitate the filling, pickling and forming of such batteries, as specified in the preamble of claim 1, for example as disclosed in EP-A-0334091.

Mat-immobilized-electrolyte type, Pb-acid electric storage batteries include at least one galvanic cell element comprising opposite polarity electrodes (e.g., a stack of positive and negative plates) separated one from the other by a fibrous, absorbent mat (e.g., polypropylene, Dynel, glass, or felt). The mat is compressed between the electrodes and capillarily immobilizes electrolyte of the battery within the cell element. One such battery is described in US-A-3,553,020 (Corbin et al).

Mat-immobilized-electrolyte batteries may be either of the "flooded" electrolyte type or of the "starved" electrolyte type. Flooded-electrolyte-type batteries have the mat and electrodes saturated with electrolyte in that the volume of the electrolyte present substantially equals or exceeds the void volume of the pores within the mat and the electrodes. Starved-electrolyte-type batteries, on the other hand, have less electrolyte volume than the void volume of the pores within the mat and the electrodes. So-called gas-recombinant batteries, for example, operate in a starved electrolyte condition wherein electrolyte volume is only about 60% to 90% of the available void volume within the mat and electrodes and thereby provides sufficient void space therein to permit migration of oxygen from the positive electrode directly to the negative electrode for consumption thereat. One such gas-recombinant battery employing a resilient, glass fibre mat is described in US-A-3,862,861 (McClelland et al)

Assembly and acid-filling of mat-immobilized electrolyte batteries is more difficult than conventional batteries which do not have compressed fibrous mats between the plates. Assembly of mat-immobilized electrolyte batteries, for example, requires the extra step (and associated equipment) of compressing the stack of plates and mats in order to place the stack in the container. Conventional (i.e., mat-free) lead-acid storage batteries are commonly filled with sulphuric acid electrolyte by placing the cell elements in the battery container in the unformed (i.e., uncharged condition) state wherein the positive and negative electrodes both comprise essentially lead oxide. Thereafter, H₂SO₄ forming acid is metered into the cell compartment atop the elements until the compartment is filled. The electrodes are subsequently electrolytically formed (i.e., initially charged) by passing a forming current therethrough. In some cases, the residual forming acid is then dumped and fresh acid substituted therefor as the working electrolyte. In other instances, the forming acid has sufficient residual strength to remain in the battery as the working electrolyte. Between the time the forming acid is added and the formation process begins, the sulphuric acid reacts exothermally with the lead oxide in the positive and negative electrodes to form lead sulphate in both the positive and negative electrodes. This sulphation reaction is known in the art as "pickling". The pickling reaction is initially quite vigorous and results in the generation of considerable heat and some gas. This initial pickling reaction subsides considerably after the first few minutes following acid addition as the acid weakens (i.e., becomes more dilute), the electrodes become sulphated and the lead oxide available for reaction decreases.

Electrolytic formation of the battery follows pickling and involves passing forming current through the battery to convert the lead sulphate in the electrodes to lead dioxide in the positive electrodes, lead in the negative electrodes and to reconstitute sulphuric acid in the electrolyte. In addition to any residual pickling heat, the electrolytic formation process adds considerable electrically-generated (IR) heat to the battery thereby causing the temperature of the elements to increase significantly. High element temperatures during formation cause the gassing overvoltage of the electrodes to drop which in turn undesirably causes excessive gassing. Batteries containing glass mats compressed between the electrodes interfere with the circulation of electrolyte between the plates and the escape of heat and gases from the cell element and accordingly retain the pickling heat for significantly longer periods of time than conventional mat-free batteries as well as trap gases within the cell element.

In conventional, mat-free batteries the gassing that occurs during pickling and formation, whilst undesirable, can nonetheless be tolerated as the gas can readily escape the cell element from between the plates. For batteries having glass mats compressed between the plates, however, gassing during formation must be kept to a minimum in order to prevent any gas from becoming entrapped within the mat causing so-called "dry spots" therein where little or no acid is present. In this regard, dry spots, whether formed during the pickling or formation reactions, will not only interfere with the formation reaction by causing incomplete formation in some regions of the electrodes and increased current densities in other regions thereof, but ultimately results in undesirable lead "treeing" (i.e., dendrite growth) between the plates, reduced battery capacity and cold-cranking performance, as well as shortened cycle life. Moreover, in conventional, mat-free batteries the electrolyte is more mobile and free to mix and circulate within the cell element due to natural convection so that formation of the active material of the plates occurs substantially uniformly throughout the cell element.

Filling mat-immobilized-electrolyte type batteries with electrolyte by dispensing the electrolyte atop the cell element after the cell elements have been placed in their container (i.e., the way conventional batteries are typically filled) can have a detrimental effect on the performance of the battery. In this regard, when so filled, the mats often: make it difficult to obtain uniform distribution of acid throughout the cell element; prevent mixing/circulation of the electrolyte within the cell element during pickling and formation; can result in vaporization of the electrolyte within the cell element during pickling; and/or result in mats containing pockets of trapped gases (i.e., dry spots). More specifically, electrolyte introduced into the container atop the cell element percolates down through the cell element from the top thereof at a rate limited by the wicking rate of the glass mat. The presence of the mat can cause trapping of air within the element, can prevent the ready escape of the gases and heat generated therein during the pickling reaction and can prevent acid from circulating between the electrodes. Some of the filling acid may run down the sides of the element and make inroads into the elements from the sides, but this too is slow and still traps gases and heat. As a result, not only are dry spots prevalent, but the temperature of the element is not uniform and may be elevated to an undesirably high level and maintained thereat for a prolonged period of time. Moreover, the concentration of the electrolyte within the cell element tends to vary from one location to the next. One reason for this is the stratification that occurs by virtue of the fluid front of the electrolyte descending down or otherwise into the cell element. As the electrolyte fluid front (i.e., the initial few centimetres of the electrolyte fluid wave moving into the element) advances into the element, it is more rapidly depleted of its H₂SO₄ content than is the electrolyte tracking behind the fluid front. As a result, by the time the liquid front moves into the centre of the element, it has a much lower sulphuric acid concentration than the acid tracking behind it (e.g., near the top of the element). If the wicking rate and starting acid temperature are slow and high (e.g., ambient temperature) respectively, it is possible to end up with a slightly alkaline aqueous solution in the middle of the element. This results in high Pb⁺⁺ solubility due to the high pH and high temperatures. If this solubility is high and remains high even for only several minutes, the soluble lead migrates into the separators where it is converted to lead which electrically bridges (i.e., shorts) adjacent electrodes during formation and/or subsequent charging of the battery. Moreover, this acid concentration imbalance affects the conductivity of the electrolyte at different locations in the element which, in turn, affects current density distribution during formation. Another reason for electrolyte concentration variations is the formation of dry spots resulting from trapped gases discussed above. Eventually, acid will infiltrate even into the dry spots, at least to some extent, but is quickly consumed by the unformed PbO in the regions of the electrodes adjacent the dry spots resulting in pockets of low concentration acid within the element. Finally, because mat-immobilized electrolyte elements do not take up electrolyte as quickly as mat-free elements, care must be taken to meter the electrolyte into the container atop the element at a sufficiently slow rate as to preclude overflow thereof from the top of the container above the cell element.

US-A-4,743,270 (McCartney, Jr. et al) proposes to minimize some of the aforesaid problems by putting the electrolyte into the container first, and then immersing the cell element slowly into the electrolyte. Another manufacturer (See EP-A-334 091) reduces the need to compress the stack during assembly into its container and purportedly reduces the acid-fill time by impregnating the resilient fibrous glass mat with a water/acid soluble glue/binder and pre-compressing the mat by as much as 50 percent. The binder holds the separator in its pre-compressed state until it is wetted by electrolyte during filling. The glue dissolves as soon as it is wetted by electrolyte and allows the resilient glass mat to immediately spring back, swell within the cell and press tightly against the plates it is sandwiched between. Suggested water-soluble binders include methyl cellulose (preferred), carboxymethy cellulose, ethylhydroxyethyl cellulose, hydroxyethyl cellulose, fish glue, soybean glue, guar flour (from the fruit of the carob tree) as well as starch and dextrin-based glues.

Whilst the use of pre-compressed mats bound with water/acid-soluble binders facilitates assembly and perhaps accelerates acid filling to some extent, they do not completely solve the acid-filling problem much less the heat and gas trapping or electrolyte circulation problems discussed above in connection with pickling and formation. In this regard, the mats bound only by water/acid soluble binders begin to swell as soon as they are wetted with electrolyte so that the first wetted portions of the mat (i.e., adjacent the electrolyte fill opening in the container) swell, partially close off the acid entry zone and retard rapid flow and even distribution of the electrolyte throughout the cell element. This is true even though a substantial portion of the separator which is remote from the fill opening might still be compressed.

A better solution to the aforesaid filling, pickling and formation problems would be (1) to get the electrolyte distributed evenly throughout a mat-immobilized electrolyte-type cell element as quickly as possible, (2) to ensure that the gases and heat generated during pickling and formation can readily escape the cell element, and (3) to maintain good mixing/circulation of the electrolyte in the element at least into the early stages of the formation cycle.

A separator according to the present invention, for use in a mat-immobilized-electrolyte, lead-acid storage battery, is characterised by the features specified in the characterising portion of claim 1.

Accordingly, it is the principle object of the present invention to provide a unique, resilient fibrous mat for mat-immobilized-electrolyte, lead-acid storage batteries which permits rapid, substantially uniform, filling of the batteries with electrolyte as well as ready de-gassing, cooling and circulation of the electrolyte during pickling and formation of the battery. It is a further object of the present invention to provide a unique, readily acid-fillable, mat-immobilized-type, Pb-acid storage battery including the aforesaid separators and a method of assembling and preparing same for service. These and other objects and advantages of the present invention will become more readily apparent from the detailed description thereof which is given hereafter in conjunction with the accompanying drawings,in which:
Figure 1 is a partially broken-away, exploded, isometric view of a battery cell element including an electrolyte-immobilizing separator in accordance with the present invention;
Figure 2 is a plan view of a pre-compressed separator in accordance with the present invention;
Figure 3 is a view in the direction 3-3 of Figure 2;
Figure 4 is a similar view to that of Figure 3, after a binder has been destroyed during formation and the pre-compression has been relieved;
Figure 5 is a plan view of another embodiment of a separator in accordance with the present invention;
Figure 6 is a view in the direction 6-6 of Figure 5;
Figure 7 is a plan view of still another embodiment of a separator in accordance with the present invention;
Figure 8 is a view in the direction 8-8 of Figure 7;
Figure 9 is a side elevational view of a cell element in accordance with the present invention before the binder of the separator has been destroyed; and
Figure 10 is a side elevational view of the cell element of Figure 9 after the binder of the separator has been destroyed.

The present invention comprises an improved separator for a mat-immobilized-electrolyte, lead-acid, storage battery (e.g., gas-recombinant battery). The separator comprises a mat of randomly-oriented resilient fibres resistant to and wettable by sulphuric acid electrolyte, and a binder for holding the mat in a stressed state at a predetermined pre-compressed thickness at least into the beginning of the formation process. The invention is particularly applicable to fibrous glass mats commonly used in gas-recombinant batteries and described in US-A-3,862,861 (McClelland et al) (supra). The binder comprises a thermo-setting resin which is insoluble in sulphuric acid under normal conditions (i.e., ambient temperature) but is sufficiently degradable therein under battery formation conditions (i.e., high temperature and oxidative) as to free the stressed resilient fibres therefrom and allow the separator to expand whilst the battery is being formed. Such an acid-resistant binder ensures retention of the pre-compressed state throughout filling, pickling and at least the initial part of the formation process and delays expansion of the separator until after these essential processes have been completed or are well under way. Binders seen to be effective for retaining the mat in such a prolonged compressed state are the insoluble thermo-setting resins commonly used in the paper-making industry to provide wet strength to paper. Hence, polyacrylics such as that sold under the trade name of Parez 631 NC available from the American Cyanamid Company, U.S.A., or melamine formaldehyde such as that sold under the trade name of Paramel HE also available from the American Cyanamid Company, U.S.A., are candidate binders for this application, with melamine-formaldehyde being preferred as being less likely to degrade in H₂SO₄ alone than the polyacrylics. Other possible candidates include the "warm box" and "hot box" resins which are commonly used in the foundry industry for bonding cores or mould sands together and which are based on urea formaldehyde, phenol formaldehyde, furfuryl alcohol and/or furon, as is well-known in the foundry industry. The binder will preferably comprise melamine formaldehyde resin prepolymers, which may be added to the glass mat after it has already been formed by the manufacturer (e.g., by saturating or spraying the mat with a solution/suspension of the prepolymers). Preferably, however, the resin will be added to the fibres at the time the mat itself is being formed by its manufacturer by including the prepolymer resin in the slurry used to manufacture the glass mat in the first instance. The mat is then dried, compressed and heated to cure the resin to form the binder of the present invention.

The separator will preferably be compressed to a thickness which is at least about 10 percent less than the inter-electrode gap between the positive and negative electrodes on either side of the separator, and will preferably be compressed to about 20 percent less than the gap between the positive and negative electrodes sandwiching the separator. In its uncompressed state, the separator will have a thickness that is greater than said inter-electrode gap. In a preferred embodiment, the mat will include a plurality of protuberances projecting from at least one face of the separator to space the separator from the adjacent electrode. Most preferably, the protuberances will be on both faces of the separator to centre the separator between the electrodes. The thickness of the separator between the outboard extremities of the protuberances will be equal to or slightly more than the desired inter-electrode gap (i.e., the gap between the positive and negative plate). The majority of the separator, area-wise, is a web portion which lies between the protuberances and which is compressed more than the protuberances and preferably to about 20 percent less than the interelectrode gap that the separator is to fill. The protuberances space the web portion from the electrodes on either side thereof and provide flow channels between the web and the adjacent electrode(s) for facilitating the rapid flow of electrolyte into the electrode/separator stack (i.e., cell element) which flow would otherwise be inhibited by glass mat.

The invention further comprehends a method of assembling and preparing a mat-immobilized-electrolyte, lead-acid, storage battery for service including the steps of alternately stacking a plurality of positive and negative polarity electrodes together so as to have a predetermined inter-electrode gap between adjacent electrodes; positioning a separator in each of the gaps between the electrodes wherein the separator comprises a mat of randomly-oriented resilient fibres and an acid-resistant binder of the type described above holding the mat in a stressed state at a compressed thickness which is at least about 10 percent less than the gap; positioning the electrode-separator stack in a battery container; introducing sulphuric acid electrolyte quickly into the container and throughout the stack substantially unencumbered by the compressed mat; allowing the thusly filled battery to stand for a sufficient period of time (i.e., about 30 minutes or more) until the pickling reaction is well under way; and, thereafter, electrolytically forming the battery so as to convert the electrodes to Pb and PbO₂ and concurrently degrade the binder sufficiently to release the resilient fibres from their confinement by the binder so that they can rebound to their unstressed state and cause the separator to tightly engage the electrodes on either side thereof. Preferably the sulphuric acid will be added to the container at a sub-ambient temperature (e.g., about -17.8°C (0°F)) to keep the temperature of the battery below a temperature of about 54°C (130°F) during pickling. After the pickling reaction is substantially complete, the battery is subjected to formation which elevates the temperature of the battery above 71°C (160°F) and preferably above 77°C (170°F) as a result of some continuation of the pickling plus the IR heating that occurs within the battery during formation. Formation continues for a time sufficient (e.g., 20 hours or more) to completely convert the positive and negative active materials to lead dioxide and lead as appropriate. This prolonged high temperature and oxidative environment also serves to degrade the otherwise acid stable binder to the point where the fibres entrapped thereby are released and spring back to fill the inter-electrode gap.

In accordance with the invention, it is desirable to keep the separator in the pre-compressed state and not permit it to expand during the filling, pickling and initial formation procedures. It is desirable to get the acid into the plates as quickly and as uniformly as possible to ensure uniform pickling of the electrodes. It is likewise important to keep the inter-electrode gap as free as possible during pickling. In this regard, keeping the mat under compression (i.e., by not breaking down its binder) permits the gases generated during pickling to readily rise within the cell element which not only promotes mixing of the acid therein but ready escape of the hot gases from the cell element rather than trapping therein and formation of gas voids and dry spots within the element. Moreover, unencumbered flow of the electrolyte in the interelectrode gap lets natural convection occur whereby hotter acid can readily rise between the plates which further promotes mixing of the electrolyte therein and more uniform temperature distribution and pickling (i.e., sulphation) of the plates. Temperature-wise, it is desirable to maintain a substantially uniform temperature throughout the element plates and to preferably keep that temperature below about 54°C (130°F).

It is likewise desirable to keep the separator in a pre-compressed state as long as possible during the formation step to promote acid circulation within the cell stack as well as escape of hot gases therefrom. In this latter regard, not only are the gases more easily permitted to escape from the cell stack, but in the course thereof, the movement of the gases through the cell stack helps promote the movement of the electrolyte into the mat for a more complete wetting thereof by the electrolyte.

The preferred binder in accordance with the present invention comprises melamine formaldehyde resin of the type typically used in the paper industry for increasing the wet strength of paper. The resin is added to the fibre as a prepolymer thereof and, in the subsequent processing, is heated to cause cross-linking thereof and formation of durable, acid-resistant bonds which hold the fibres together. The concentration of the binder in the separator will be up to about 5 percent by weight. It is desirable, however, that the least amount of binder be used as is possible consistent with the need to form a bond between the resilient fibres which will resist the capillary forces that occur upon wetting of the mat and which tend to physically break the bonds without actually chemically degrading the binder itself. In the case of glass fibres, it is anticipated that a resin content at least about 2 percent by weight of the glass is necessary for this purpose. A lesser amount of binder may be possible by enhancing the bond between the polymer and the glass fibre. In this regard, the bond between the glass and the binder can likely be enhanced by first applying a coupling agent to the surface of the glass. A number of commercially available silane coupling agents such as gamma-chloropropyltrimethoxysilane, vinyltrichlorosilane, vinyltriethoxysilane, vinyltrimethoxysilane, vinyltris(Beta-methoxyethoxy)silane, gamma-methacryloxypropyltrimethoxysilane, Beta-(3,4-epoxycyclohexyl)ethyltrimethoxysilane, gamma-glycidoxypropyltrimethoxysilane, gamma-mercaptopropyltrimethoxysilane, gamma-aminopropyltriethoxysilane, N-Beta-(aminoethyl)-gamma-aminopropyltrimethoxysilane, and gamma-ureidopropyltriethoxysilane are believed useful for this purpose. In the surface treatment process, the silane coupling agent is added to a mixture of water and alcohol or to other appropriate organic solvents in an amount of 0.1 wt. % to 5 wt. %, with respect to the amount of the glass fibres to be treated. The pH of the solution of the silane coupling agent and the solvent is adjusted to be at such a pH at which the silane coupling agent is hydrolyzed. The fibres are then contacted with the solution and the excess solution removed followed by drying the fibres. Thereafter the fibres are subjected to heat treatment at 100°C to 120°C to promote bonding of the silane to the glass. Alternately, the silane may be mixed directly with the binder suspension used to impregnate the mat. The glass fibres (i.e., with or without the silane pretreatment) are finally coated with a solution/suspension of a prepolymer of the binder in a pH-controlled medium. An appropriate catalyst may be included in the suspension/solution as may be required to initiate further curing (e.g., cross-linking). Excess liquid is removed and the coated fibres dried. In this condition, the resin remains essentially inactive at ambient temperature but will, upon application of heat, cure or cross-link to form the acid-resistant binder of the present invention.

Preferably, the resin is added to the glass fibre at the time the mat is first made and in essentially the same way that it is added to a cellulose pulp in the well-known paper-making process. Thereafter excess liquid is removed from the mat-making slurry through a series of steps including the application of vacuum and finally heating to dryness. Alternatively a pre-made mat may be saturated with the prepolymer solution and dried. Thereafter to pre-compress the separator, the mat is pressed at about 93°C (200°F) between perforated heated plates while drawing a vacuum through the perforated plates. A stop, of the appropriate thickness, is provided to control the final spacing of the plates during the pressing operation and hence the thickness of the finished separator. The heated plates causes the resin to cure and bond the fibres together in the compressed state. For those embodiments having protuberances for spacing the separator from the adjacent electrodes, the perforated, heated plates will have appropriately formed dimples or grooves formed therein for moulding or otherwise shaping the face(s) of the separator during the compression operation. When such protuberances are used the perforations in the heated plates will preferably be located in the dimples or grooves used to form the protuberances.

### Example and Detailed Description of Specific Embodiments of the Invention

A mat supplied by the Hollingsworth & Voss Company, U.S.A., and identified as HV260, which is a glass mat weighing 260 grams per square metre and having an average thickness of about 1.715 mm (0.0675 inches) is impregnated with a melamine formaldehyde prepolymer sold by the American Cyanamid Corporation, U.S.A., under the trade name of Paramel HE. As purchased, Paramel HE is a 6 percent by weight suspension of the prepolymer in a pH-controlled aqueous solution. A sufficient amount of the Paramel solution is added to water to provide 120 grams of resin per litre of solution and this solution is used to impregnate/saturate a pre-formed mat. This solution must be acidic to effect curing of the resin. Excess liquid is drawn off from the saturated mat by vacuum. The mat is then dried and finally heated between two hot plates (i.e., at 93°C (200°F)) for two minutes. The plates are spaced apart by a distance of 0.889 mm (0.035 inches) and form a compressed mat having a binder content of about 4 percent by weight of the glass. Immersion of the compressed mat in room temperature, 1.260 specific gravity, sulphuric acid will not cause the mat to spring back to its original uncompressed state, whereas exposing the mat to a battery formation environment will cause it to spring back.

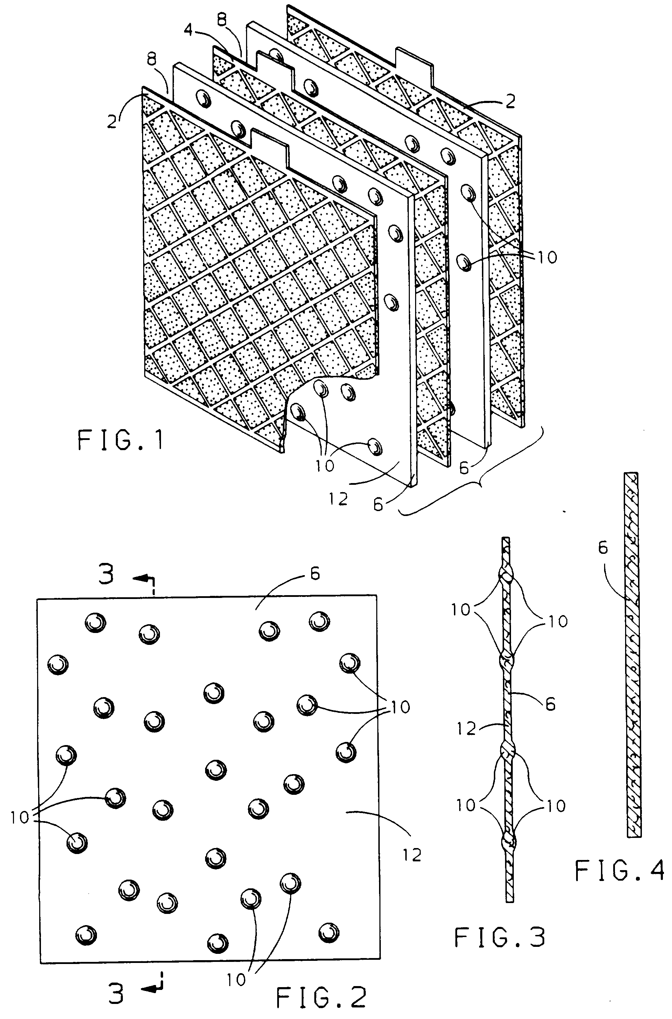

Figure 1 is an exploded, partially broken-away view of a battery cell element in accordance with the present invention including positive polarity plates 2, a negative polarity plate 4, and an inter-plate glass mat separator 6 positioned in a gap 8 between the positive and negative polarity electrodes. The glass mat 6 includes hemi-spherical protuberances 10 for spacing the separator 6 from the adjacent electrodes 2 and 4 as appropriate. As best shown in Figures 2 and 3, the hemi-spherical protuberances 10 project from a thinner web portion 12 of the separator 6 and are preferably on both sides of the web 12. Alternatively, the protuberances may project from only one side to space the separator from only one electrode and, in such an embodiment, it is preferred that the protuberances be on the face of the separator which is destined to abut the positive electrode, which is the thicker of the two electrodes, and requires more acid. Similarly, glass mats typically have one smooth face and one rougher face as a natural result of the process whereby they are made. It is preferred that the smooth face of the separator abut the positive electrode, as the smooth surface tends to wick (i.e. transfer) acid more readily than the rougher surface. Figure 3 shows the stressed, pre-compressed separator of the present invention before formation of the battery in which it is installed. Figure 4 illustrates the separator 6 of Figure 3 after formation of the battery is complete and the web portion 12 has expanded to the thickness of the protuberances 10 which are no longer seen in the expanded mat.

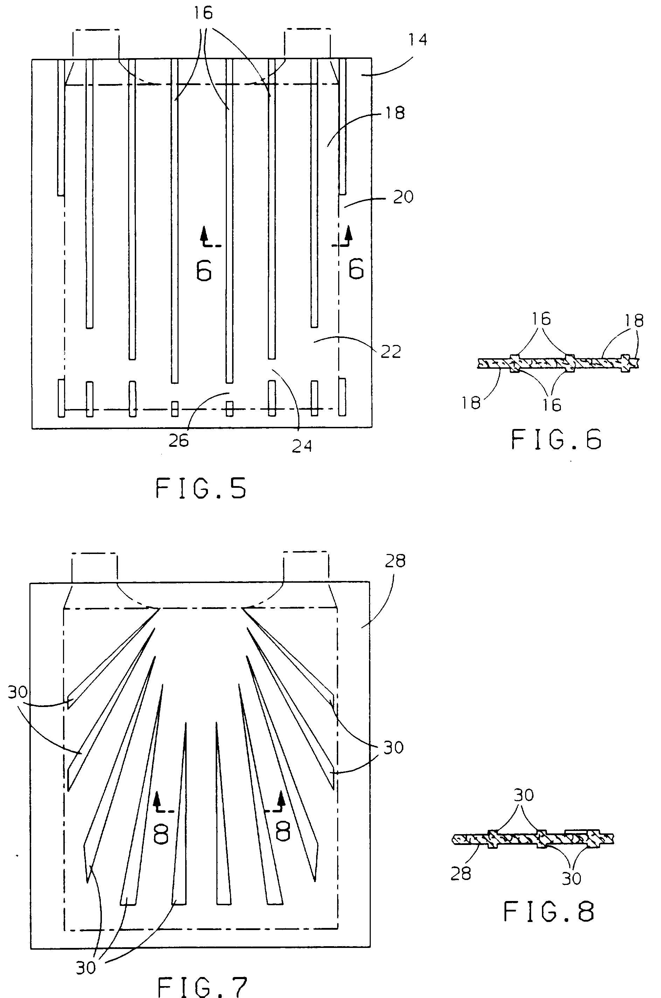

Figures 5 and 6 illustrate another embodiment of the invention wherein a separator 14 includes a plurality of rib-like protuberances 16 between a compressed web portion 18. The ribs 16 are preferably discontinuous from top to bottom as shown by discontinuities 20, 22, 24 and 26, which permit acid flowing down along the sides of the cell element to readily move laterally into the cell element at the bottom corners of the element and then upwardly from the bottom of the cell element to facilitate more rapid filling of the cell element with acid. Figures 7 and 8 show still another embodiment of the present invention which includes a separator 28 and a plurality of rib-like protuberances 30 in a fan-like array as illustrated.

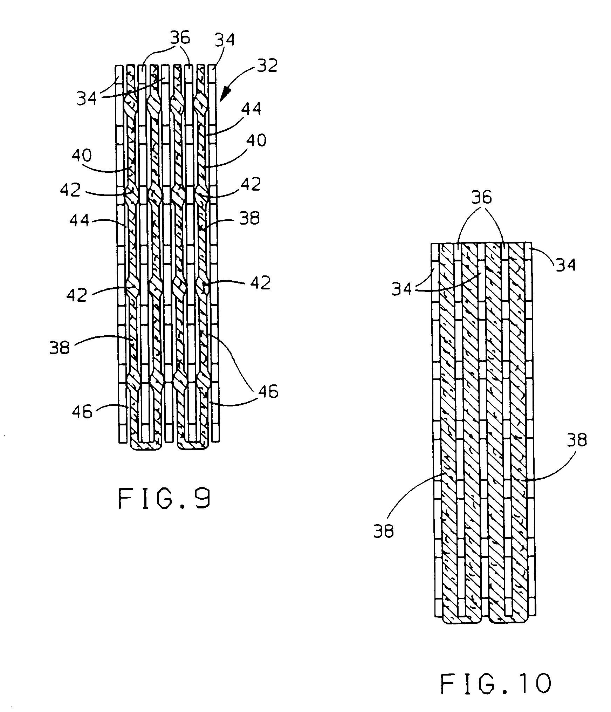

Figures 9 and 10 show a battery cell element 32 in accordance with the present invention before and after formation of the cell element respectively. More specifically, Figure 9 shows a cell element 32 comprising a plurality of positive electrodes 34 interspersed between negative polarity electrodes 36 each separated, one from the other, by a pre-compressed separator 38 having web portions 40 and protuberances 42 in accordance with the present invention. As illustrated in Figure 9, the separators 38 will be wrapped around, or enveloped about, the bottom edge of the negative electrodes 36. Moreover, and as best shown in Figure 9, the thickness of the pre-compressed separator at the web 40 will be less than an inter-electrode gap 44 between the positive and negative electrodes. The thickness of the separator 38 at the protuberances 42, however, will be approximately equal to that of the intended inter-electrode gap 44 such that little or no compression of the cell element is required during the final assembly operations of the battery. During filling of the battery with electrolyte, gaps 46 between the webs 40 of the separator and the adjacent electrodes 34, 36 serve as flow channels for facilitating the rapid flow of electrolyte into the cell element 32. Figure 10 illustrates the cell element of Figure 9 after formation has taken place and the separator 38 has swollen due to the degradation of the binder and release of the resilient glass fibres therefrom.

Whilst the present invention has been disclosed primarily in terms of specific embodiments thereof it is not intended to be limited thereto but rather only to the extent set forth hereafter in the scope of the claims which follow.

## Claims

1. A separator (6;14;28;38) for use in a mat-immobilised-electrolyte, lead-acid storage battery, said separator (6;14;28;38) comprising a mat of randomly-oriented, resilient fibres resistant to and wettable by sulphuric acid electrolyte, and a binder holding said mat in a stressed state at a compressed thickness which is less than the unstressed and uncompressed thickness of the mat, characterised in that said binder comprises a resin which is substantially insoluble in sulphuric acid but is sufficiently degradable therein under the high temperature and oxidation conditions experienced during the electrochemical formation of a mat-immobilised-electrolyte lead-acid storage battery to initially convert its electrodes to Pb and PbO₂, as to free said mat from said stressed state, such that, when said separator (6;14;28;38) is used to separate a positive polarity electrode (2;34) from a negative polarity electrode (4;36) in the production of a mat-immobilised-electrolyte lead-acid storage battery, and said storage battery is filled with sulphuric acid electrolyte, expansion of said separator (6;14;28;38) is delayed until after electrochemical formation of the battery has commenced.

2. A separator (6;14;28;38) according to claim 1, in which said fibres comprise glass fibres, and said compressed thickness of the separator (6;14;28;38) is at least 10 percent less than an inter-electrode gap (8;44) between said electrodes in said storage battery.

3. A separator (6;14;28;38) according to claim 1 or 2, in which said binder comprises a thermo-setting resin.

4. A separator (6;14;28;38) according to claim 3, in which said resin is melamine-formaldehyde resin.

5. A separator (6;14;28;38) according to claim 1 or 2, in which said separator (6;14;28;38) includes a web portion (12;18;40) having a plurality of protuberances (10;16;30;42) projecting from at least one face thereof, which protuberances (10;16;30;42), when the separator (6;14;28;38) is installed in a storage battery, space the web portion (12;18;40) from an adjacent electrode (2;4;34;36) during filling of the storage battery with electrolyte, said web portion (12;18;40) being at said compressed thickness.

6. A separator (6;14;28;38) according to claim 5, in which said protuberances (10;16;30;42) project from opposite faces of the separator (6;14;28;38) to substantially centre the web portion (12;18;40) between adjacent electrodes (2;4;34;36).

7. A separator (14;28;38) according to claim 5, in which said protuberances comprise elongated ribs (16;30).

8. A separator (14;38) according to claim 7, in which said ribs (16) are substantially parallel to each other.

9. A separator (28;38) according to claim 7, in which said ribs (30) are arranged in a substantially fan-like array.

10. A separator (14;38) according to claim 8, in which said parallel ribs (12) are discontinuous so as, when the separator (6;14;28;38) is installed in a storage battery, to permit ready lateral flow of electrolyte between the electrodes of the storage battery during filling thereof.

11. A method of assembling and preparing a mat-immobilized-electrolyte, lead-acid storage battery for service which comprises the steps of: alternately stacking a plurality of positive and negative polarity electrodes (2;4;34;36) together with a predetermined inter-electrode gap (8;44) between adjacent electrodes; positioning a separator (6;14;28;38) in each of said gaps (8;44), positioning the stacked electrodes (2;4;34;36) and separators (6;14;28;38) in a battery container; introducing sulphuric acid electrolyte into said battery container so that said acid quickly flows between said electrodes (2;4;34;36) and said separators (6;14;28;38); allowing said battery to stand for a time sufficient to pickle said electrodes (2;4;34;36); and thereafter electrolytically forming said battery so as to initially charge said battery; characterised in that said separator (6;14;28;38) is a separator according to claim 1, in which said separator comprises a mat of randomly-oriented, resilient glass fibres and said binder holds said mat in a stressed state at a compressed thickness which is at least 10 percent less than said inter-electrode gap (8;44), said mat, in its uncompressed state, having a thickness greater than said inter-electrode gap (8;44); in that, during the introduction of sulphuric acid electrolyte into said battery container, said acid quickly flows between said electrodes (2;4;34;36) and said separators (6;14;28;38) substantially unencumbered by said compressed mat; and in that, during the electrolytic formation of the battery, said binder degrades so that said mat expands into tight engagement with the electrodes (2;4;34;36) adjacent thereto.

12. A method according to claim 11, in which said separator is a separator according to any one of claims 5 to 10.

13. A method according to claim 11, in which said sulphuric acid is introduced into said battery at a sub-ambient temperature sufficient to maintain the temperature of the battery during pickling below about 54°C (130°F).

14. A method according to claim 13, in which said acid temperature is about - 17.8°C (0°F).

15. A method according to claim 13, in which the temperature of said battery is raised to at least 71°C (160°F) during the electrolytic formation thereof, and is maintained at that temperature for a time at least sufficient to degrade said binder and to release said mat from said stressed state.

## Patentansprüche

1. Separator (6; 14; 28; 38) zur Verwendung in einer Bleisäurespeicherbatterie mit mattenimmobilisiertem Elektrolyt, wobei der Separator (6; 14; 28; 38) umfaßt, eine Matte von zufällig orientierten, elastischen Fasern, die beständig gegen und benässbar durch einen Schwefelsäureelektrolyten sind, und einen Binder, der diese Matte in einem gespannten Zustand bei einer komprimierten Dicke hält, die kleiner als die ungespannte und unkomprimierte Dicke der Matte ist,
dadurch gekennzeichnet,
daß dieser Binder ein Harz umfaßt, das in Schwefelsäure im wesentliche unlöslich ist aber darin unter den Hochtemperatur- und Oxidationsbedingungen, die während der elektrochemischen Bildung einer Bleisäurespeicherbatterie mit mattenimmobilisiertem Elektrolyt zur anfänglichen Umwandlung derer Elektroden zu Pb und PbO₂, hinreichend degradierbar ist, um diese Matte aus ihrem gespannten Zustand zu befreien, derart, daß dann, wenn der Separator (6; 14; 28; 38) bei der Herstellung einer Bleisäurespeicherbatterie mit mattenimmobilisiertem Elektrolyt verwendet wird, um eine Elektrode positiver Polarität (2; 34) von einer Elektrode negativer Polarität (4; 36) zu trennen, und diese Speicherbatterie mit Schwefelsäurelektrolyt gefüllt wird, eine Expansion des Separators (6; 14; 28; 38) verzögert wird, bis nachdem eine elektrochemische Bildung der Batterie begonnen hat.

2. Separator (6; 14; 28; 38) nach Anspruch 1,
in dem die Fasern Glasfasern umfassen, und wobei die komprimierte Dicke des Separators (6; 14; 28; 38) mindestens 10% geringer als ein Zwischenelektrodenabstand (8; 44) zwischen den Elektroden in der Speicherbatterie ist.

3. Separator (6; 14; 28; 38) nach Anspruch 1 oder 2,
in dem der Binder ein thermohärtendes Harz umfaßt.

4. Separator (6; 14; 28; 38) nach Anspruch 3,
in dem das Harz ein Melaminformaldehydharz ist.

5. Separator (6; 14; 28; 38) nach Anspruch 1 oder 2,
in dem der Separator (6; 14; 28; 38) ein Gewebeabschnitt (12; 18; 40) mit einer Mehrzahl von Erhöhungen (10; 16; 30; 42) enthält, die von mindestens einer Seitenfläche davon hervorstehen, wobei die Erhöhungen (10; 16; 30; 42), wenn der Separator (6; 14; 28; 38) in eine Speicherbatterie eingesetzt ist, den Gewebeabschnitt (12; 18; 40) von einer benachbarten Elektrode (2; 4; 34; 36) während des Füllens der Speicherbatterie mit Elektrolyt beabstanden, wobei der Gewebeabschnitt (12; 18; 40) unter der komprimierten Dicke vorliegt.

6. Separator (6; 14; 28; 38) nach Anspruch 5,
in dem die Erhöhungen (10; 16; 30; 42) von gegenüberliegenden Seitenflächen des Separators vorstehen, um den Gewebeabschnitt (12; 18; 40) im wesentlichen mittig zwischen benachbarten Elektroden (2; 4; 34; 36) zu zentrieren.

7. Separator (14; 28; 38) nach Anspruch 5,
in dem die Erhöhungen längliche Rippen (16; 30) umfassen.

8. Separator (14; 38) nach Anspruch 7,
in dem die Rippen (16) im wesentlichen parallell zueinander sind.

9. Separator (28; 38) nach Anspruch 7,
in dem die Rippen (30) in einer im wesentlichen propellerähnlichen Zusammenstellung angeordnet sind.

10. Separator (14; 38) nach Anspruch 8,
in dem die parallelen Rippen (12) diskontinuierlich sind, um dann, wenn der Separator (6; 14; 28; 38) in eine Speicherbatterie eingesetzt ist, ohne weiteres einen seitlichen Fluß des Elektrolyts zwischen den Elektroden der Speicherbatterie während des Füllens derselben zu ermöglichen.

11. Verfahren zum Zusammenbau und zur Vorbereitung einer Bleisäurespeicherbatterie mit mattenimmobilisiertem Elektrolyt zum Gebrauch, das umfaßt die Schritte: des alternierenden Aufeinanderstapelns einer Mehrzahl von Elektroden (2; 4; 34; 36) von positiver und negativer Polarität mit einem vorbestimmten Zwischenelektrodenabstand (8; 44) zwischen benachbarten Elektroden; des Positionierens eines Separators (6; 14; 28; 38) in jedem der Abstände (8; 44); des Positionierens der gestapelten Elektroden (2; 4; 34; 36) und Separatoren (6; 14; 28; 38) in einem Batteriebehälter; des Zugebens von Schwefelsäureelektrolyt in den Batteriebehälter, so daß die Säure schnell zwischen die Elektroden (2; 4; 34; 36) und die Separatoren (6; 14; 28; 38) fließt; des Ermöglichens, daß die Batterie für eine Zeit steht, die ausreicht, um die Elektroden (2; 4; 34; 36) zu beizen; und des darauffolgenden elektrchemischen Bildens der Batterie um die Batterie anfänglich zu laden;
dadurch gekennzeichnet,
daß der Separator (6; 14; 28; 38) ein Separator nach Anspruch 1 ist, in dem der Separator eine Matte von zufällig orientierten, elastischen Glasfasern umfaßt und der Binder diese Matte in einem gespannten Zustand bei einer komprimierten Dicke hält, die wenigstens 10% geringer als der Zwischenelektrodenabstand (8; 44) ist, wobei diese Matte in ihrem unkomprimierten Zustand eine Dicke größer als der Zwischenelektrodenabstand (8; 44) aufweist, derart, daß während der Zugabe von Schwefelsäureelektrolyt in den Batteriebehälter diese Säure schnell und im wesentlichen ungehindert von der komprimierten Matte zwischen die Elektroden (2; 4; 34; 36) und die Separatoren (6; 14; 28; 38) fließt; und daß während der elektrolytischen Bildung der Batterie der Binder degradiert, so daß die Matte in engen Eingriff mit den ihr benachbarten Elektroden (2; 4; 34; 36) expandiert.

12. Verfahren nach Anspruch 11,
in dem der Separator ein Separator nach einem der Ansprüche 5 bis 10 ist.

13. Verfahren nach Anspruch 11,
in dem die Schwefelsäure der Batterie bei einer Sub-Umgebungstemperatur zugegeben wird, die ausreicht, um die Temperatur der Batterie während des Beizens unter etwa 54°C (130°F) zu halten.

14. Verfahren nach Anspruch 13,
in dem die Säuretemperatur etwa -17,8°C (0°F) beträgt.

15. Verfahren nach Anspruch 13,
in dem die Temperatur der Batterie während der elektrolytischen Bildung auf wenigstens 71°C (160°F) angehoben wird, und bei dieser Temperatur für eine Zeit aufrechterhalten wird, die zumindest ausreichend ist, um den Binder zu degradieren und die Matte aus ihrem gespannten Zustand freizugeben.

## Revendications

1. Séparateur (6;14;28;38) destiné à être utilisé dans une batterie d'accumulateurs au plomb, contenant'un électrolyte immobilisé par un mat, ledit séparateur (6;14; 28;38) comprenant un mat formé de fibres élastiques orientées de façon aléatoire et résistantes à un électrolyte formé d'acide sulfurique et aptes à être mouillées par cet électrolyte, et un liant retenant ledit mat dans un état contraint, sur une épaisseur à l'état comprimé, qui est inférieure à l'épaisseur du mat non placé sous contrainte et non comprimé, caractérisé en ce que ledit liant comprend une résine qui est sensiblement insoluble dans l'acide sulfurique, mais est suffisamment dégradable dans ce dernier dans des conditions de haute température et d'oxydation intense, qui sont présentes pendant la formation électrochimique de la batterie d'accumulateurs au plomb contenant un électrolyte immobilisé par un mat, pour convertir initialement ses électrodes en Pb et PbO₂, de manière à libérer ledit mat dudit état contraint, de sorte que, lorsque ledit séparateur (6;14;28;38) est utilisé pour séparer une électrode à polarité positive (2; 34) d'une électrode à polarité négative (4;36) lors de la fabrication d'une batterie d'accumulateurs au plomb contenant un électrolyte immobilisé par un mat et que ladite batterie d'accumulateurs est remplie par l'électrolyte formé d'acide sulfurique, la dilatation dudit séparateur (6;14;28;38) est retardée jusqu'après le début de la formation électrochimique de la batterie.

2. Séparateur (6;14;28;38) selon la revendication 1, dans lequel lesdites fibres comprennent des fibres de verre, et ladite épaisseur à l'état comprimé du séparateur (6;14;28;38) est inférieure, d'au moins 10 pour cent, à l'intervalle (8;44) entre lesdites électrodes de ladite batterie d'accumulateurs.

3. Séparateur (6;14;28;38) selon la revendication 1 ou 2, dans lequel ledit liant comprend une résine thermodurcissable.

4. Séparateur (6;14;28;38) selon la revendication 3, dans lequel ladite résine est une résine mélamine-formaldéhyde.

5. Séparateur (6;14;28;38) selon la revendication 1 ou 2, dans lequel ledit séparateur (6;14;28;38) inclut une partie formant âme (12;18;40) comportant une pluralité de protubérances (10;16;30;42) qui font saillie à partir d'au moins une face de cette partie formant âme, lesquelles protubérances (10;16;30;42) écartant, lorsque le séparateur (6;14;28;38) est installé dans une batterie d'accumulateurs, la partie formant âme (12;18;40) par rapport à une électrode adjacente (2;4;34;36) pendant le remplissage d'une batterie d'accumulateurs par un électrolyte, ladite partie formant âme (12;18;40) possédant ladite épaisseur à l'état comprimé.

6. Séparateur (6;14;28;38) selon la revendication 5, dans lequel lesdites protubérances (10;16;30;42) sont taillées à partir de faces opposées du séparateur (6;14; 28;38) pour essentiellement centrer la partie formant âme (12;18;40) entre des électrodes adjacentes (2;4;34;36).

7. Séparateur (14;28;38) selon la revendication 5, dans lequel lesdites protubérances comprennent des nervures allongées (16;30).

8. Séparateur (28;38) selon la revendication 7, dans lequel lesdites nervures (16) sont sensiblement parallèles entre elles.

9. Séparateur (28;38) selon la revendication 7, dans lequel lesdites nervures (30) sont disposées sous la forme d'un réseau sensiblement en forme d'éventail.

10. Séparateur (14;28) selon la revendication 8, dans lequel lesdites nervures parallèles (12) sont discontinues de telle sorte que, lorsque le séparateur (6,14;28;38) est installé dans une batterie d'accumulateur, elles permettent un écoulement latéral aisé de l'électrolyte entre les électrodes de la batterie d'accumulateurs pendant le remplissage de cette dernière.

11. Procédé d'assemblage et de préparation d'une batterie d'accumulateurs au plomb contenant un électrolyte immobilisé par un mat, pour l'utilisation de cette batterie, qui inclut les étapes consistant à :
empiler alternativement une pluralité d'électrodes (2;4;34;36) à polarités positive et négative, moyennant la présence d'un intervalle prédéterminé (8;44) entre des électrodes adjacentes; positionner un séparateur (6;14; 28;38) dans chacun desdits intervalles (8;44), positionner les électrodes empilées (2;4;34;36) et les séparateurs (6; 14;28;38) dans une caisse de batterie; introduire un électrolyte formé d'acide sulfurique dans ladite caisse de batterie de telle sorte que ledit acide circule rapidement entre lesdites électrodes (2;4;34;36) et lesdits séparateurs (6;14;28;38), laisser reposer la batterie pendant une durée suffisante pour obtenir l'opération de sulfatation desdites électrodes (2;4;34;36), et former ensuite du point de vue électrolytique ladite batterie de manière à charger initialement cette batterie; caractérisé en ce que ledit séparateur (6;14;28;38) est un séparateur selon la revendication 1, dans lequel ledit séparateur comprend un mat formé de fibres de verre élastiques à orientation aléatoire, et ledit liant retient ledit mat dans un état contraint, à une épaisseur à l'état comprimé, qui est inférieure, d'au moins 10 pour cent audit intervalle (8;44) entre les électrodes, ledit mat possédant, dans son état non comprimé, une épaisseur supérieure à l'intervalle (8;44) entre les électrodes, en ce que, pendant l'introduction de l'électrolyte formé d'acide sulfurique dans ladite caisse de batterie, ledit acide circule rapidement entre lesdites électrodes (2;4;34;36) et lesdits séparateurs (6;14;28;38) essentiellement sans être gêné par ledit mat comprimé; et en ce que, pendant la formation électrolytique de la batterie, ledit liant s'altère de telle sorte que ledit mat se dilate pour venir en contact étroit avec les électrodes (2;4;34; 36) qui sont adjacentes au mat.

12. Procédé selon la revendication 11, selon lequel ledit séparateur est un séparateur selon l'une quelconque des revendications 5 à 10.

13. Procédé selon la revendication 11, selon lequel ledit acide sulfurique est introduit dans ladite batterie à une température inférieure à la température ambiante et suffisante pour maintenir la température de la batterie, pendant l'opération de sulfatation, à une valeur inférieure à environ 54°C (130°F).

14. Procédé selon la revendication 13, selon lequel ladite température de l'acide est égale à environ -17,8°C (0°F).

15. Procédé selon la revendication 13, selon lequel la température de ladite batterie est accrue à au moins 71°C (160°F) pendant la formation électrolytique de la batterie, et est maintenue à cette température pendant une durée au moins suffisante pour altérer ledit liant et libérer ledit mat dudit état contraint.
